# EUROPEAN PATENT SPECIFICATION

(11) **EP 2 018 342 B1**
(45) Date of publication and mention of the grant of the patent: **26.06.2013**
(21) Application number: 07748472.3
(22) Date of filing: 08.05.2007
(51) Int. Cl.: B66F 9/075, B60S 5/06

(54) **BATTERY CHANGE TABLE AND REACH TRUCK EQUIPPED WITH A BATTERY CHANGE TABLE**
BATTERIEWECHSELTISCH UND SCHUBSTAPLER MIT EINEM BATTERIEWECHSELTISCH
TABLE DE REMPLACEMENT DE BATTERIES ET CHARIOT ÉLÉVATEUR ÉQUIPÉ DE CETTE TABLE

(30) Priority: 17.05.2006 SE 0601101
(43) Date of publication of application: 28.01.2009
(73) Proprietor: Toyota Material Handling Europe AB, 595 81 Mjölby (SE)
(72) Inventor: CARDELL, Per-Erik, 589 33 Linköping (SE); ADOLFSSON, Lisette, 590 15 Boxholm (SE)
(74) Representative: Rasch, Teija Kaarina
(86) International application number: PCT/SE2007/050311
(87) International publication number: WO 2007/133158

(56) References cited:
- JP-A- 9 048 297
- JP-A- 9 220 937
- JP-A- 07 315 780
- JP-A- 2000 103 597
- JP-A- 2000 103 597
- JP-A- 2003 261 293
- JP-A- 2005 001 819
- JP-U- 59 143 821

## Description

### TECHNICAL FIELD

The present invention relates to a battery change table according to the preamble to Claim 1.

The invention also relates to a reach truck according to the preamble to Claim 10.

### BACKGROUND ART

Battery-driven reach trucks are commonly used for handling material. By reach truck is meant a lift truck that has a mast unit that can be moved backward and forward in the longitudinal direction of the truck depending upon the current lifting situation. In order to be able to utilize the truck to the full, for example for shift working, it must be possible to replace a discharged battery pack with a fully-charged battery pack. In order to facilitate this replacement, the battery pack, that can weigh several hundred kilos, is placed on a battery change table in the reach truck in such a way that a discharged battery pack can be rolled off the reach truck and a fully-charged battery pack can be rolled onto the reach truck. Following this, the truck is ready to be used again and the battery pack will rest on the rollers until it is time for another replacement of the battery pack, whereupon the replacement procedure is repeated.

With such a change table arrangement, the rollers in the battery change table are, however, subjected to large forces during operation. The reason for this is that the chassis of a reach truck does not have suspension, which, in combination with the considerable weight of the battery pack and the effect of driving upon uneven ground, puts great stresses on the rollers and their bearings. This has an adverse effect on the life of the battery change table.

A solution to this problem is to provide more rollers for the battery pack to rest on, in order to distribute the weight of the battery pack over these, but this is an expensive solution. Another solution is to use larger rollers and bearings, but this is also an expensive solution and, in addition, affects the position of the driver's seat, as more space is required. It is also possible to replace the rollers with sliding bearings, but this can make the replacement of the battery pack more difficult on account of the high friction.

JP 9 048297 discloses a battery loading device of an industrial vehicle, facilitating service work and exchange work, such as replenishment of battery liquid.

JP 2000 103597 discloses a battery forward-drawing device in which a battery is prevented from being brought into contact with a reach leg when the battery of a reach-type battery forklift is drawn, and the number of part items for friction prevention and for engagement is reduced.

JP 9 220937 discloses a battery carrier for an electric motorcar. The battery can be stably mounted and dismounted with ease by providing a shelf for housing the battery with a roller which rolls in the direction that the battery is mounted on and dismounted from the shelf, and by supporting the roller such that it can be moved up and down from the plane of the shelf on which the battery is placed.

### OBJECTS OF THE INVENTION

An object of the invention is thus to reduce the load on the rollers during operation of the truck.

Another object of the present invention is to provide a battery change table with an extended life.

### DISCLOSURE OF THE INVENTION

These object are achieved according to the present invention by a battery change table as defined in the introduction and with the characteristics that are listed in the characterizing part of Claim 1. The object is also achieved by a reach truck as defined in the introduction and with the characteristics that are listed in the characterizing part of Claim 10.

As the sliding table comprises a lifting device for raising and lowering the battery pack in such a way that when the sliding table is in the first position, the rollers support the battery pack, and when the sliding table is in a second position, the lining device supports the battery pack so that the rollers do not bear any of the weight of the battery pack, several benefits are achieved. Firstly, the load on the rollers and their bearings is reduced as the rollers only bear the weight of the battery pack when the battery pack is being replaced and, in these situations, the truck is stationary. During use of the truck, when the truck is in motion, the whole weight of the battery pack will be supported by the lifting device, for which reason the rollers and their bearings will not bear the weight of the battery pack. By means of this solution, the life of the battery change table is thus prolonged.

The lifting device is suitably designed to raise the battery pack when the sliding table is moved from the first position to the second position, and is designed to lower the battery pack down onto the rollers when the sliding table is moved from the second position to the first position. As a result of this, the time that is required to carry out a replacement of the battery pack is reduced.

The sliding table is preferably able to be moved in the longitudinal direction of the truck, with the first position being a forward position and the second position being a backward position. As a result of this, the replacement of the battery pack is made easier.

The lifting device preferably comprises at least one wedge-shaped element comprising an inclined wedge surface, with the wedge-shaped element being arranged in the sliding table with the inclined wedge surface facing in the direction towards the second position, and a lifting element comprising a slide surface that is parallel to the wedge surface, with the slide surface of the lifting element being designed to slide along the inclined wedge surface to achieve a parallel movement of the lifting element in relation to the rollers in order thereby to raise or lower the battery pack during movements of the sliding table between the first and second positions. By this means, a stable way of raising and lowering the battery pack in relation to the rollers is achieved. In addition, the parallel movement of the lifting elements ensures that the battery pack is in a horizontal position at all times.

The lifting device suitably comprises at least a first and a second wedge-shaped element separated in the direction of movement of the sliding table and each comprising an inclined wedge surface, with the wedge-shaped elements being arranged in the sliding table with their inclined wedge surfaces facing in the direction towards the second position, and a lifting element comprising two slide surfaces parallel to the wedge surfaces, with the slide surfaces of the lifting element being designed to be able to slide along the wedge surfaces to achieve a parallel movement of the lifting element in relation to the rollers in order thereby to raise or lower the battery pack during movements of the sliding table between the first and second positions. By this means, an even more stable way of raising and lowering the battery pack in relation to the rollers is achieved. In addition, the parallel movement of the lifting elements ensures that the battery pack is in a horizontal position at all times.

The battery change table preferably comprises two lifting devices that are separated in a lateral direction, transverse to the direction of movement of the sliding table. By this means, the weight of the battery pack will be distributed across several lifting elements, whereby the lateral stability is increased.

The incline angle of the wedge-shaped element is suitably in the range 15-30°, and the incline angle is preferably approximately 20°. By this means, the force that is required to raise up the battery pack is minimized, while at the same time an automatic lowering of the battery pack is ensured when the sliding table leaves the second position.

The second position is suitably defined by a stop surface arranged in the chassis of the truck, against which the lifting device is intended to make contact when the sliding table reaches the second position, whereupon the lifting device will slide up the respective wedge surface in the direction towards the first position. By this means, the movement of the sliding table is utilized to raise up the battery pack.

The movement of the sliding table between the first and second positions is preferably intended to be carried out by means of the truck's mast unit. By this means, an effective way is obtained of achieving the movement of the sliding table.

The sliding table suitably comprises a locking device designed to lock the sliding table to the mast unit during movements from the second position to the first position and designed to lock the sliding table to the chassis of the truck when the sliding table is in the second position. By this means, it is possible to move the sliding table from the second to the first position when a replacement of a battery pack is to be carried out, while at the same time the battery pack is locked in position when the truck is in use.

### BRIEF DESCRIPTION OF THE DRAWINGS

The present invention will now be described with reference to the attached drawings, in which:
Figure 1 is a side view of a reach truck provided with a battery change table according to the present invention.
Figure 2 is a perspective view, viewed from above, of a part of the reach truck in Figure 1.
Figure 3 is a perspective view, viewed from below, of a part of the reach truck in Figure 1.
Figures 4a-4b are views of the battery change table, viewed from above and from below respectively.
Figure 5 is a perspective view of a lifting element, which constitutes a part of a lifting device according to a preferred embodiment of the invention.
Figure 6 is a side view of the reach truck, showing schematically the function of the invention.
Figure 7 is a sectioned view along the line A-A in Figure 6 and shows a locking device.

### MODE(S) FOR CARRYING OUT THE INVENTION

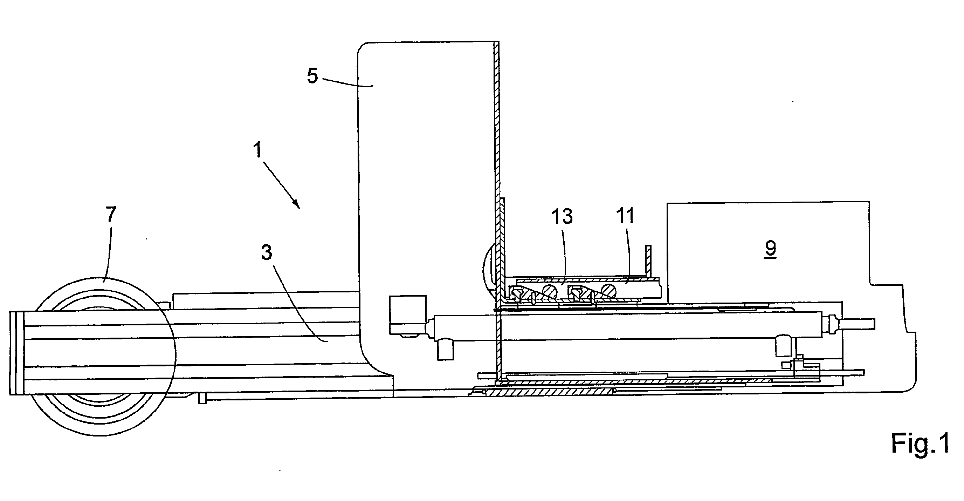

Figure 1 shows a side view of a reach truck 1. The truck comprises a chassis 3 provided with a mast unit 5, a pair of front wheels 7 and a steerable rear wheel (not shown) above which a motor housing 9 is arranged. A battery change table 11 is arranged in the chassis, between the mast unit 5 and the motor housing 9. The battery change table 11 is intended to support a battery pack (not shown) that drives the truck. The battery change table is designed as a sliding table 13 and can move in the longitudinal direction of the truck 1. The movement can take place between a backward position, in which the battery pack can be connected to the truck's motor, and a forward position, in which a discharged battery pack can be replaced by a fully-charged battery pack. The movement of the sliding table 13 is achieved by means of the movable mast unit 5 in such a way that the mast unit either pushes the sliding table from the forward position to the backward position or alternatively pulls the sliding table 13 from the backward position to the forward position. This will be explained in greater detail below.

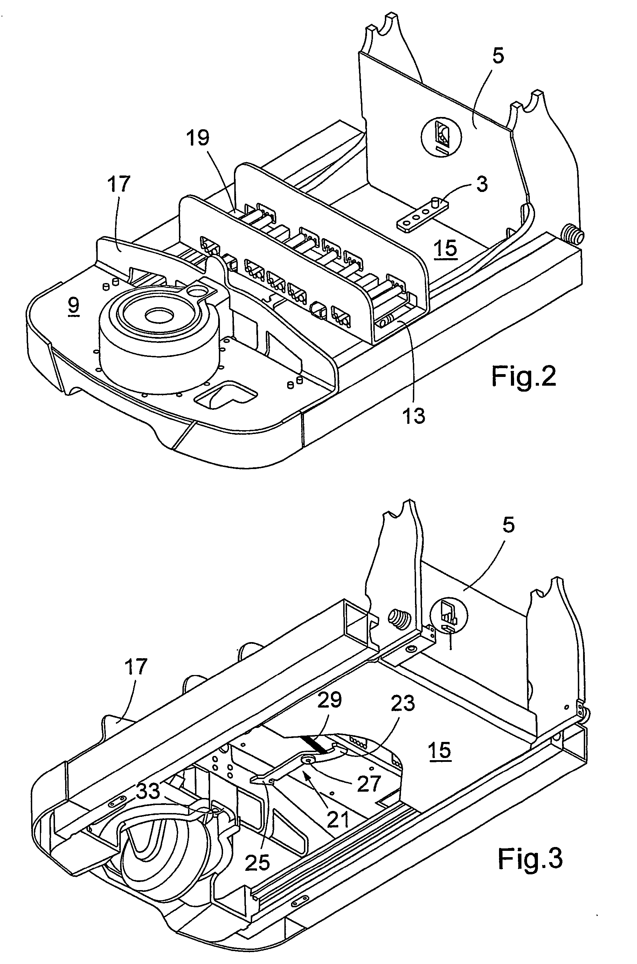

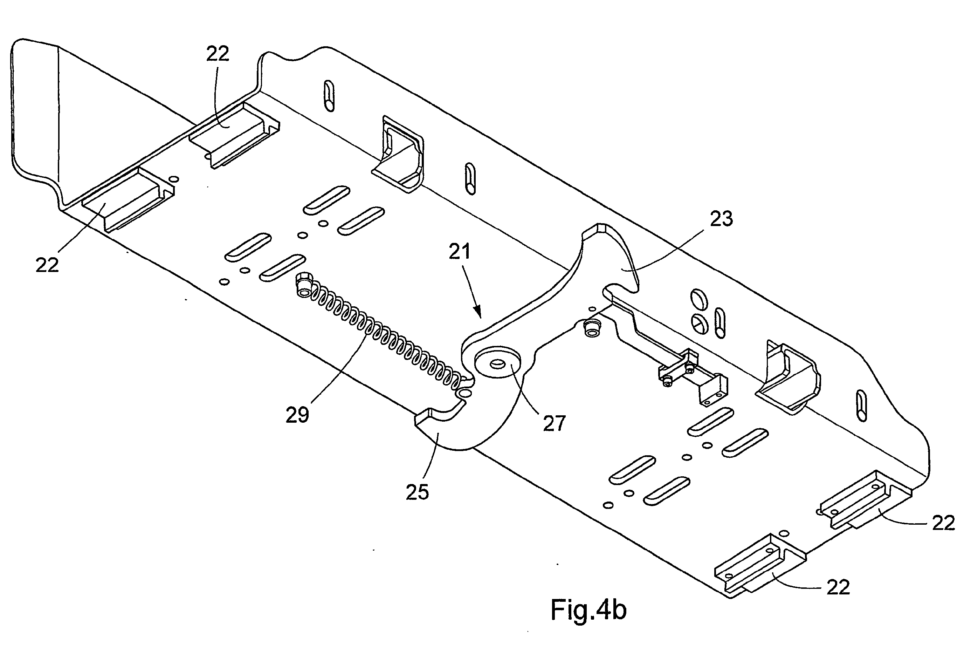

Figures 2-3 show views of a part of the chassis of the reach truck viewed from above and from below respectively. A part of the mast unit 5 is shown to the right in Figure 2, which mast unit is arranged on a carriage 15 that can move forward and backward in the longitudinal direction of the truck. The motor housing 9 is intended to be arranged to the left in Figure 2. The motor housing 9 comprises a vertical section 17 against which the sliding table 13 is intended to make contact during operation of the truck 1. The sliding table 13 comprises an essentially U-shaped plate member provided with a plurality of rollers 19 that together form a battery change table upon which the battery pack is intended to rest when the sliding table is in the forward position. In the forward position, the discharged battery pack can thereby be rolled off the sliding table 13, after which a fully-charged battery pack can be rolled on. The underside of the sliding table 13 is provided with runners or sliding feet 22 (see Figure 4b) that can slide on the chassis while the sliding table 13 is moving between the forward and backward positions.

The underside of the sliding table 13 is provided with a sprung locking device 21 for locking the sliding table 13 in the backward position and for enabling the sliding table 13 to be moved from the backward to the forward position. The locking device 21 comprises a double-ended locking hook with a first hook element 23 and a second hook element 25. The locking hook is arranged to pivot around a pivot axle 27 and is sprung in a rotational direction by means of a tension spring 29, which will be explained in greater detail below (see also Figure 4b). A first fixing device 31 in the form of a vertical pin 31 (see Figure 2) is arranged on the carriage 15 next to the mast unit 5, and a second fixing device 33 in the form of a piston 33 extends vertically downward (see Figure 3) from the lower part of the vertical section 17. An operator can move the piston 33 in a vertical direction by means of an operating device (not shown). The first hook element 23 can hook onto the pin 31 when the sliding table is in the forward position, while the second hook element 25 can hook onto the piston 33 when the sliding table is in the backward position.

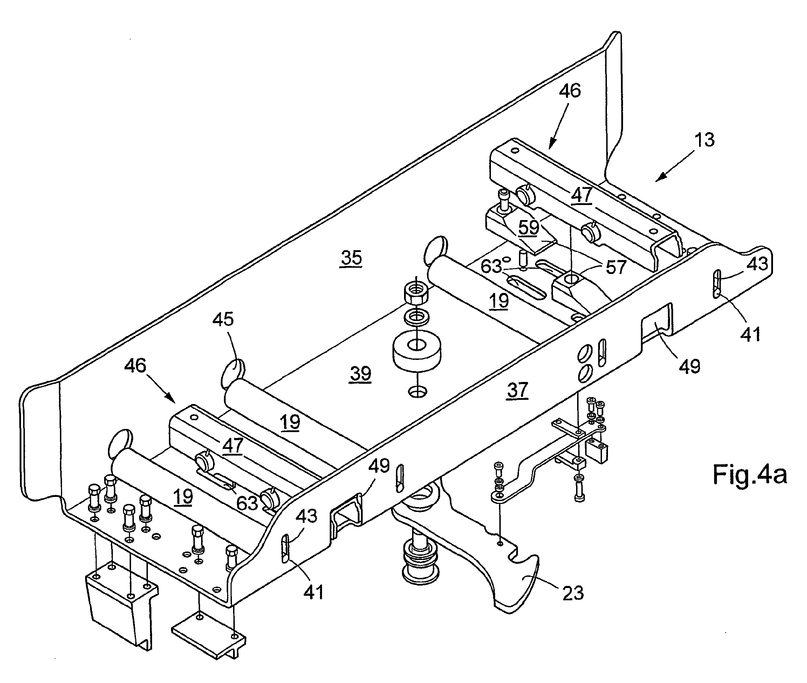

Figures 4a-4b show the sliding table 13 viewed from above and from below respectively. The sliding table 13 comprises a front wall 35, a rear wall 37 and a bottom section 39 that connects the two walls 35, 37. Four rollers 19 are arranged in the sliding table 13 to create the battery change table (although it is possible to use more or fewer rollers). These are arranged parallel to each other in the sliding table 13 and extend in the longitudinal direction of the truck when the sliding table is arranged in the truck. The rollers 19 are arranged in the sliding table in the same horizontal plane. The ends of each roller are provided with pins 41, that are journalled in bearings in respective slots 43 in the front and rear walls (shown only for the rear wall). Circular openings 45, with a diameter that is slightly larger than the diameter of the rollers 19, are arranged in the front wall 35, directly above the respective slots 43. When mounting the rollers 19 in the sliding table 13, the rollers are inserted through the respective circular openings 45 so that the pins 41 can be positioned in the respective slots 43.

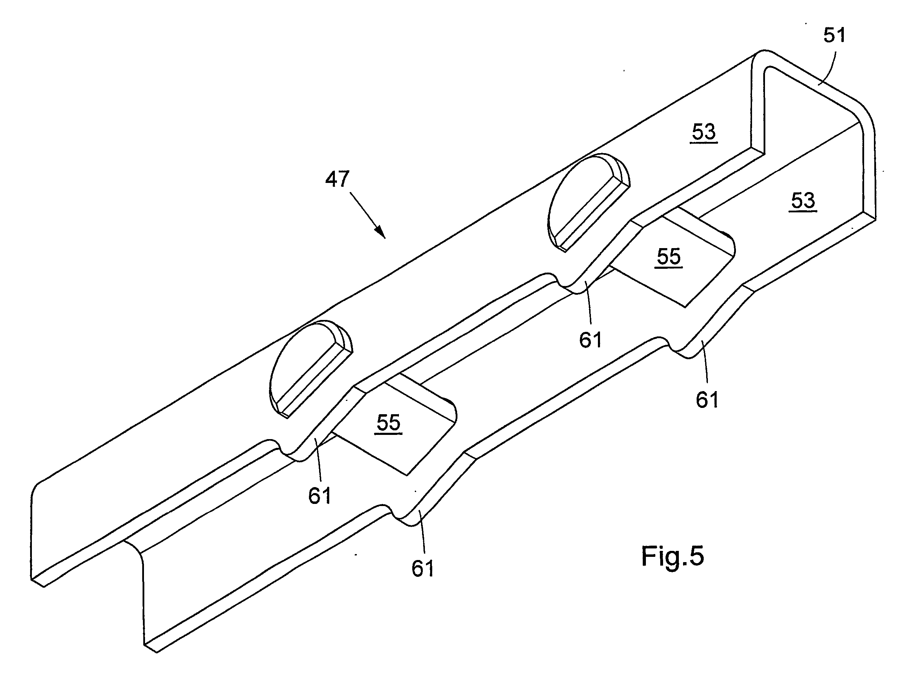

Figures 4-5 also show a lifting device 46 according to the invention. This comprises two elongated lifting elements 47 that are in a horizontal and parallel position between the rollers 19 and at a distance from each other. The lifting elements 47 have a length that is such that they fit between the front wall 35 and the rear wall 37. The rear wall 37, that is the wall that faces towards the motor housing 9, is provided with two rectangular cut-outs 49, one for each lifting element 47. The lifting elements 47 can be moved forward and backward in the sliding table 13, viewed in the longitudinal direction of the truck, and will then partially project out through their respective cut-outs 49.

Each lifting element 47 is essentially U-shaped and comprises a web 51 that connects two flanges 53. The flanges 53 face downwards in the sliding table 13 so that the lifting elements 47 form an inverted U-shape. The inside of web 51 is provided with two angled slide elements 55 arranged a particular distance apart, viewed in the longitudinal direction of the lifting element 47. Two pairs of wedge-shaped elements 57 are attached, for example by a screw connection, to the bottom section 39 of the sliding table (only one pair of the wedge-shaped elements is shown in Figure 4a). Each pair of wedge-shaped elements 57 is associated with one of the lifting elements 47 and they are therefore arranged the same distance apart, viewed in the transverse direction of the sliding table 13, as the distance between the lifting elements 47. The wedge-shaped elements 57 are also arranged the same distance apart as the distance between the angled slide elements 55. In addition, the thin ends of the wedge-shaped elements 57 face in the direction towards the rear wall 37. The wedge-shaped elements 57 have an inclined surface 59 with a wedge angle that is the same as the angle at which the angled slide elements 55 are arranged in the respective lifting elements, that is the wedge-shaped elements 57 and the slide elements 55 are inclined obliquely upwards, viewed in the direction of forward movement of the truck. In addition, each flange 53 is provided with a pair of projections 61 that extend down through a pair of slots 63 in the bottom section 39 of the sliding table and that are arranged on each side of each pair of wedge-shaped elements 57. The slots 63 extend parallel to the rollers 19, and the flanges 53 of each lifting element 47 are thus able to straddle each pair of wedge-shaped elements 57 with the projections 61 inserted in the slots 63. By means of this arrangement, the respective lifting elements 47 can move parallel to the longitudinal axes of the rollers 19, between a forward position in which the lifting element 47 is completely enclosed inside the walls 35, 37 of the sliding table 13, and a backward position in which the lifting element 47 partially projects out from the wall 37 of the sliding table that faces towards the motor housing 9, through the rectangular cut-out 49.

When the lifting elements 47 are in the backward position, the upper surface of the lifting elements 47 will be in a horizontal plane that is below the horizontal plane of the rollers 19. The lifting elements 47 are designed to assume this backward position during a replacement of a battery pack when the sliding table 13 is in the forward position and consequently the battery pack will rest on the rollers. When the lifting elements 47 are in the forward position (see Figure 4a), the upper surface of the lifting elements 47 will be in a horizontal plane that is above the upper surface of the rollers 19. The lifting elements are designed to assume this forward position during operation of the truck, when the sliding table 13 is in the backward position and consequently the battery pack is supported by the lifting elements. During a movement of the lifting elements 47 from the backward position to the forward position, the angled slide elements 55 will cause the lifting elements to slide up the wedge-shaped elements 57 and, during a movement of the lifting elements 47 from the forward position to the backward position, the angled slide elements 55 will cause the lifting elements to slide down the wedge-shaped elements 57.

Both when the lifting elements 47 are in the backward position and in the forward position, the angled slide elements 55 will be on the inclined surfaces 59 of the wedge-shaped elements, that is, they are in contact with these at all times. The slide elements 55 and the wedge-shaped elements 57 are preferably made of a durable plastic material, for example a POM plastic such as Delrin®.

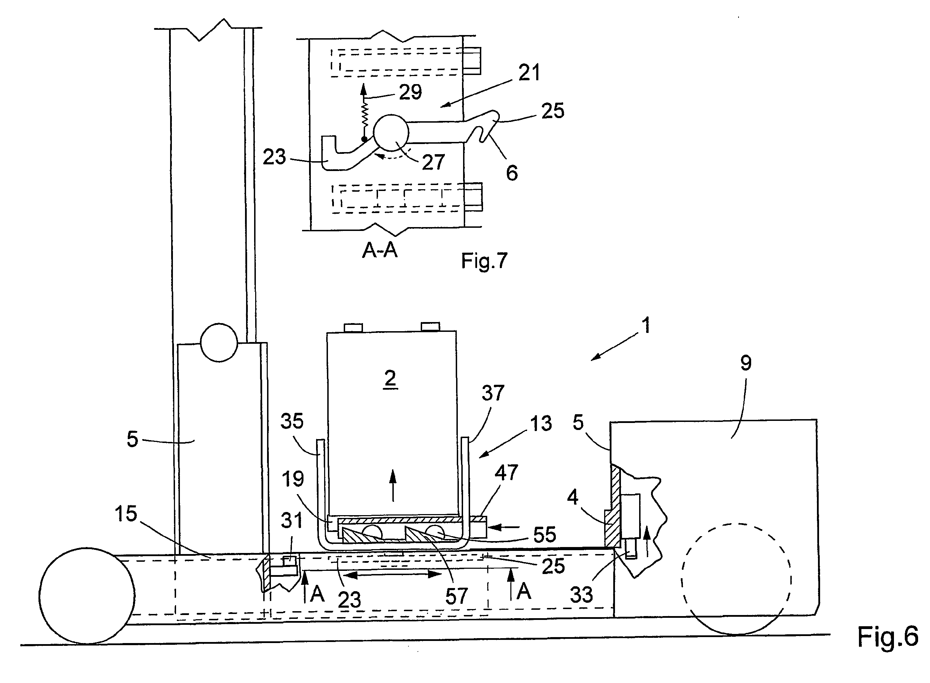

Figure 6 shows a schematic side view of a reach truck 1 provided with a battery pack 2. The function of the battery change table 13 will now be described with reference to this figure. During the replacement of the battery pack, the sliding table 13 and the battery pack 2 are furthest to the left viewed in Figure 6. In this forward position, the first locking hook 23 is in engagement with the pin 31, so that the battery change table 13 is held firm in the carriage 15, see also Figure 7. In this position, the battery pack 2 rests on the rollers 19 that support the whole weight of the battery pack 2, as the upper surface of the lifting elements is below the upper surface of the rollers. The discharged battery pack can now be rolled off the sliding table 13 and a fully-charged battery pack can be rolled on. When this has been completed, the carriage 15 pushes the sliding table 13 and the battery pack to the right, viewed in Figure 6, until the projecting parts of the lifting elements 47 meet a stop surface 4 on the vertical section 5. When this takes place, during the continued movement of the carriage 15 to the right in Figure 6, the slide elements 55 of the lifting elements 47 start to slide up the wedge-shaped elements 57 until the lifting elements 47 are fully inserted into the sliding table 13. As there is a battery pack 2 placed on the rollers 19, the lifting elements 47 will raise the battery pack 2 to a level that is above the rollers 19 when the lifting elements 47 are moved from the backward position to the forward position, and will thereby remove the load from the rollers. At the same time as the lifting elements 47 start to slide up the wedge-shaped elements 57, the second locking hook 25 with an inclined operating surface 6 makes contact with the retractable pin 33, whereby the locking device 21 is rotated anticlockwise (viewed in Figure 7) around its pivot pin 27 and tensions the tension spring 29 so that the first locking hook 23 comes partially out of engagement with the pin 31 and so that the second locking hook 25 enters into engagement with the moveable piston 33. By this means, the sliding table 13 is released from the carriage 15, while at the same time it is locked to the motor housing 9. The carriage 15 and the mast unit 5 can now return to the required position, after which the truck 1 is ready for operation. In this position, the battery pack 2 thus no longer rests on the rollers 19, but rests instead on the lifting elements 47, which means that the rollers 19 do not bear any of the weight of the battery pack 2.

When it is time to carry out a replacement of the battery pack, for example at a change of shift, the carriage 15 is moved to the right, viewed in Figure 6, until it reaches the front wall 35 of the sliding table 13. In this position, the moveable piston 33 can be released by an external action by an operator, which results in the first locking hook 25 pivoting back and engaging with the pin 31, as the locking device 21 is in a spring tensioned position (takes place in a clockwise direction, viewed in Figure 7). The carriage 15 can now move to the left, viewed in Figure 6, and thereby draw the sliding table 13 away from the motor housing 9. When the contact between the lifting elements 47 and the stop surface 4 is released, the lifting elements 47 and the battery pack 2 will slide down the wedge-shaped elements 57 until the lifting elements 47 assume their respective backward positions, in which the battery pack 2 again rests on the rollers 19. When the carriage 15 reaches the forward position, the battery pack 2 is ready to be rolled off the battery change table 13.

The wedge angle of the wedge-shaped elements 57 is of great importance for the functioning of the lifting device 46. If the wedge angle is too large, a greater force will be required to move the lifting elements 47 and a battery pack 2 up the wedge-shaped elements 57, that is from the backward position of the lifting elements 47 to their forward position. In addition, a large wedge angle results in the stop surface 4 being subjected to a greater load from the lifting elements 47 when these are in the forward position during operation of the truck 1. If, on the other hand, the wedge angle is too small, the lifting elements 47 will not slide back solely due to the weight of the battery pack 2 when the carriage 15 draws the sliding table 13 from the backward position to the forward position. In addition, the slide elements 55 will need to move a larger distance before the upper plane of the lifting elements is above the upper plane of the rollers 19. Studies have shown that the wedge angle should be in the range 15°-30°, but is preferably 20°.

Although the embodiment shows two pairs of wedge-shaped elements, it is of course possible to have more pairs of wedge-shaped elements and/or lifting elements arranged parallel and side by side. In addition, more than two wedge-shaped elements can be used if required, for example when the battery packs are very heavy.

The rollers 19 in the battery change table are preferably distributed over the whole of the bottom section 39 of the sliding table 13, and are preferably placed at the outer edges of the sliding table so that the battery pack rests on the battery change table in a stable way.

In the embodiment shown, the lifting elements 47 and associated wedge-shaped elements 57 are arranged inside the runners 22 (see Figures 4a-4b), viewed in the transverse direction of the truck, but they can be arranged anywhere in the transverse direction of the sliding table 13, for example directly above the sliding feet 22.

## Claims

1. Battery change table (13) for a truck (1), comprising:
a sliding table (13) comprising a plurality of rollers (19) designed to support a battery pack (2), which sliding table (13) can be moved in the truck between a first position and a second position, **characterised in that** the sliding table (13) is designed such that the battery pack (2) can be rolled on and off the sliding table when the sliding table (13) is in said first position, and such that the battery pack (2) is arranged for operation of the truck (1) when the sliding table (13) is in said second position, **and in that** the sliding table (13) comprises a lifting device (46) for raising and lowering the battery pack (2) in such a way that when the sliding table (13) is in the first position, the rollers (19) support the battery pack (2), and when the sliding table (13) is in the second position, the lifting device (46) supports the battery pack (2) so that the rollers (19) do not bear any of the weight of the battery pack (2).

2. Battery change table according to Claim 1, in which the lifting device (46) is designed to raise the battery pack (2) during the movement of the sliding table (13) from the first position to the second position, and is designed to lower the battery pack (2) onto the rollers (19) during the movement of the sliding table (13) from the second position to the first position.

3. Battery change table according to Claim 1 or 2, in which the sliding table (13) can be moved in the longitudinal direction of the truck, with the first position being a forward position and the second position being a backward position.

4. Battery change table according to any one of Claims 1-3, in which the lifting device (46) comprises at least one wedge-shaped element (57) comprising an inclined wedge surface (59), with the wedge-shaped element (57) being arranged in the sliding table (13) with the inclined wedge surface (59) facing in the direction towards the second position, and one lifting element (47) comprising a slide surface (55) that is parallel to the wedge surface (59), with the slide surface (55) of the lifting element (47) being designed to slide along the wedge surface (59) to achieve parallel movement of the lifting element (47) in relation to the rollers (19) in order thereby to raise or lower the battery pack (2) during movements of the sliding table between the first and second positions.

5. Battery change table according to any one of Claims 1-3, in which the lifting device (46) comprises at least one first and one second wedge-shaped element (57) separated in the direction of movement of the sliding table (13) and comprising a respective inclined wedge surface (59), with the wedge-shaped elements (57) being arranged in the sliding table (13) with their inclined wedge surfaces (59) facing in the direction towards the second position, and a lifting element (47) comprising two slide surfaces (55) with the slide surfaces (55) of the lifting element (47) being designed to be able to slide along the wedge surfaces (59) for parallel movement of the lifting element (47) in relation to the rollers (19) in order thereby to raise or lower the battery pack (2) during movements of the sliding table between the first and second positions.

6. Battery change table according to any one of Claims 4-5, in which the wedge angle of the wedge-shaped element (57) is in the range 15°-30°.

7. Battery change table according to Claim 6, in which the wedge angle is approximately 20°.

8. Battery change table according to any one of the preceding claims, in which the sliding table (13) comprises two lifting devices (46) separated in a lateral direction, transverse to the direction of movement of the sliding table (13).

9. Battery change table according to any one of the preceding claims, in which the sliding table (13) comprises a locking device (21) designed to be able to lock the sliding table (13) in the first position or the second position.

10. Reach truck (1) equipped with a battery change table (13), comprising:
a sliding table (13) comprising a plurality of rollers (19) designed to support a battery pack (2), which sliding table (13) can be moved in the truck between a first position and a second position, **characterised in that** the sliding table (13) is designed such that the battery pack (2) can be rolled on and off the sliding table when the sliding table (13) is in said first position, and such that the battery pack (2) is arranged for operation of the truck (1) when the sliding table (13) is in said second position, **and in that** the sliding table (13) comprises a lifting device (46) for raising and lowering the battery pack (2) in such a way that when the sliding table (13) is in the first position, the rollers (19) support the battery pack (2), and when the sliding table (13) is in the second position, the lifting device (46) supports the battery pack (2) so that the rollers (19) do not bear any of the weight of the battery pack (2).

11. Reach truck according to Claim 10, in which the lifting device (46) comprises:
at least one wedge-shaped element (57) comprising an inclined wedge surface (59), with the wedge-shaped element (57) being arranged in the sliding table (13) with the inclined wedge surface (59) facing in the direction towards the second position, and one lifting element (47) comprising a slide surface (55) that is parallel to the wedge surface (59), with the slide surface (55) of the lifting element (47) being designed to slide along the wedge surface (59) to achieve parallel movement of the lifting element (47) in relation to the rollers (19) in order thereby to raise or lower the battery pack (2) during movements of the sliding table between the first and second positions.

12. Reach truck according to Claim 11, in which the second position is defined by a stop surface (4) arranged in the chassis of the truck, against which the lifting element (47) is designed to make contact when the sliding table (13) is in the second position, with the lifting element (47) sliding up the respective inclined wedge surface (59) in the direction towards the first position.

13. Reach truck according to any one of Claims 10-12, in which movements of the sliding table (13) between the first and second positions are designed to be carried out by means of the mast unit (5) of the truck (1).

14. Reach truck according to Claim 13, in which the sliding table (13) comprises a locking device (21) designed to lock the sliding table (13) to the mast unit (5) during movements from the second position to the first position and designed to lock the sliding table (13) to the chassis of the truck when the sliding table (13) is in the second position.

## Patentansprüche

1. Batteriewechseltisch (13) für einen Stapler (1), mit:
einem Schiebetisch (13), der eine Vielzahl von Rollen (19) aufweist, die gestaltet sind, um einen Batteriesatz (2) zu unterstützen, wobei der Schiebetisch (13) in dem Stapler zwischen einer ersten Position und einer zweiten Position bewegt werden kann, **dadurch gekennzeichnet, dass** der Schiebetisch (13) gestaltet ist, sodass der Batteriesatz (2) auf den Schiebetisch und von ihm herunter gerollt werden kann, wenn der Schiebetisch (13) in der ersten Position ist, und sodass der Batteriesatz (2) zum Betrieb des Staplers (1) angeordnet ist, wenn der Schiebetisch (13) in der zweiten Position ist, und dadurch, dass der Schiebetisch (13) eine Hubeinrichtung (46) zum Anheben und Absenken des Batteriesatzes (2) auf eine Weise aufweist, dass die Rollen (19) den Batteriesatz (2) unterstützen, wenn der Schiebetisch (13) in der ersten Position ist, und die Hubeinrichtung (46) den Batteriesatz (2) unterstützt, wenn der Schiebetisch (13) in der zweiten Position ist, sodass die Rollen (19) kein Gewicht des Batteriesatzes (2) tragen.

2. Batteriewechseltisch nach Anspruch 1, bei dem die Hubeinrichtung (46) gestaltet ist, den Batteriesatz (2) während der Bewegung des Schiebetischs (13) von der ersten Position zu der zweiten Position anzuheben, und gestaltet ist, den Batteriesatz (2) während der Bewegung des Schiebetischs (13) von der zweiten Position zu der ersten Position auf die Rollen (19) abzusenken.

3. Batteriewechseltisch nach Anspruch 1 oder 2, bei dem der Schiebetisch (13) in der Längsrichtung des Staplers bewegt werden kann, wobei die erste Position eine vordere Position ist und die zweite Position eine hintere Position ist.

4. Batteriewechseltisch nach einem der Ansprüche 1 bis 3, bei dem die Hubeinrichtung (46) mindestens ein keilförmiges Element (57) mit einer geneigten Keilfläche (59) aufweist, wobei das keilförmige Element (57) in dem Schiebetisch (13) mit der geneigten Keilfläche (59) der Richtung der zweiten Position zugewandt angeordnet ist, und ein Hubelement (47) eine Schiebefläche (55) aufweist, die parallel zu der Keilfläche (59) ist, wobei die Schiebefläche (55) des Hubelements (47) gestaltet ist, sich entlang der Keilfläche (59) zu verschieben, um eine parallele Bewegung des Hubelements (47) in Bezug zu den Rollen (19) zu erreichen, um dadurch den Batteriesatz (2) während Bewegungen des Schiebetischs zwischen der ersten und zweiten Position anzuheben oder abzusenken.

5. Batteriewechseltisch nach einem der Ansprüche 1 bis 3, bei dem die Hubeinrichtung (46) mindestens ein erstes und ein zweites keilförmiges Element (57) aufweist, die in der Bewegungsrichtung des Schiebetischs (13) getrennt sind, und jeweils eine geneigte Keilfläche (59) aufweisen, wobei die keilförmigen Elemente (57) in dem Schiebetisch (13) mit ihren geneigten Keilflächen (59) der Richtung der zweiten Position zugewandt angeordnet sind, und ein Hubelement (47) zwei Schiebeflächen (55) aufweist, wobei die Schiebeflächen (55) des Hubelements (47) gestaltet sind, im Stande zu sein, sich für eine parallele Bewegung des Hubelements (47) in Bezug zu den Rollen (19) entlang der Keilflächen (59) zu verschieben, um dadurch den Batteriesatz (2) während Bewegungen des Schiebetischs zwischen der ersten und zweiten Position anzuheben oder abzusenken.

6. Batteriewechseltisch nach einem der Ansprüche 4 bis 5, bei dem der Keilwinkel des keilförmigen Elements (57) in einem Bereich von 15° bis 30° ist.

7. Batteriewechseltisch nach Anspruch 6, bei dem der Keilwinkel in etwa 20° beträgt.

8. Batteriewechseltisch nach einem der vorstehenden Ansprüche, bei dem der Schiebetisch (13) zwei Hubeinrichtungen (46) aufweist, die in seitlicher Richtung getrennt sind, und zwar quer zu der Bewegungsrichtung des Schiebetischs (13).

9. Batteriewechseltisch nach einem der vorstehenden Ansprüche, bei dem der Schiebetisch (13) eine Verriegelungseinrichtung (21) aufweist, die gestaltet ist, um im Stande zu sein, den Schiebetisch (13) in der ersten Position oder der zweiten Position zu verriegeln.

10. Schubstapler (1), der mit einem Batteriewechseltisch (13) ausgestattet ist, mit:
einem Schiebetisch (13) mit einer Vielzahl von Rollen (19), die gestaltet sind, einen Batteriesatz (2) zu unterstützen, wobei der Schiebetisch (13) in dem Stapler zwischen einer ersten Position und einer zweiten Position bewegt werden kann, **dadurch gekennzeichnet, dass** der Schiebetisch (13) gestaltet ist, sodass der Batteriesatz (2) auf den Schiebetisch und von diesem gerollt werden kann, wenn der Schiebetisch (13) in der ersten Position ist, und sodass der Batteriesatz (2) zum Betrieb des Staplers (1) angeordnet ist, wenn der Schiebetisch (13) in der zweiten Position ist, und dadurch, dass der Schiebetisch (13) eine Hubeinrichtung (46) zum Anheben und Absenken des Batteriesatzes (2) auf eine Weise aufweist, dass die Rollen (19) den Batteriesatz (2) unterstützen, wenn der Schiebetisch (13) in der ersten Position ist, und die Hubeinrichtung (46) den Batteriesatz (2) unterstützt, sodass die Rollen (19) kein Gewicht des Batteriesatzes (2) tragen, wenn der Schiebetisch (13) in der zweiten Position ist.

11. Schubstapler nach Anspruch 10, bei dem die Hubeinrichtung (46) aufweist:
mindestens ein keilförmiges Element (57) mit einer geneigten Keilfläche (59), wobei das keilförmige Element (57) in dem Schiebetisch (13) mit der geneigten Keilfläche (59) der Richtung der zweiten Position zugewandt angeordnet ist, und einem Hubelement (47) mit einer zu der Keilfläche (59) parallelen Schiebefläche (55), wobei die Schiebefläche (55) des Hubelements (47) gestaltet ist, sich entlang der Keilfläche (59) zu verschieben, um eine in Bezug zu den Rollen (19) parallele Bewegung des Hubelements (47) zu erreichen, um dadurch den Batteriesatz (2) während Bewegungen des Schiebetischs zwischen der ersten und zweiten Position anzuheben oder abzusenken.

12. Schubstapler nach Anspruch 11, bei dem die zweite Position durch eine Anschlagfläche (4), die in dem Chassis des Staplers angeordnet ist, definiert ist, wobei das Hubelement (47) gestaltet ist, mit dieser in Kontakt zu treten, wenn der Schiebetisch (13) in der zweiten Position ist, wobei sich das Hubelement (47) die jeweilige geneigte Keilfläche (59) in Richtung der ersten Position nach oben verschiebt.

13. Schubstapler nach einem der Ansprüche 10 bis 12, bei dem Bewegungen des Schiebetischs (13) zwischen der ersten und zweiten Position gestaltet sind, mittels der Hubgerüsteinheit (5) des Staplers (1) ausgeführt zu werden.

14. Schubstapler nach Anspruch 13, bei dem der Schiebetisch (13) eine Verriegelungseinrichtung (21) aufweist, die gestaltet ist, den Schiebetisch (13) während Bewegungen von der zweiten Position zu der ersten Position an der Hubgerüsteinheit (5) zu verriegeln, und gestaltet ist, den Schiebetisch (13) an dem Chassis des Staplers zu verriegeln, wenn der Schiebetisch (13) in der zweiten Position ist.

## Revendications

1. Plateau de changement de batterie (13) destiné à un chariot (1), comprenant :
un plateau coulissant (13) comprenant une pluralité de rouleaux (19) conçus pour supporter un bloc de batteries (2), lequel plateau coulissant (13) peut être déplacé dans le chariot entre une première position et une seconde position, **caractérisé en ce que** le plateau coulissant (13) est conçu de telle sorte que le bloc de batteries (2) puisse être roulé sur le plateau coulissant et hors de celui-ci lorsque le plateau coulissant (13) se trouve dans ladite première position, et de telle sorte que le bloc de batteries (2) soit agencé pour le fonctionnement du chariot (1) lorsque le plateau coulissant (13) se trouve dans ladite seconde position, et **en ce que** le plateau coulissant (13) comprend un dispositif de levage (46) pour lever et abaisser le bloc de batteries (2) de telle manière que lorsque le plateau coulissant (13) se trouve dans la première position, les rouleaux (19) supportent le bloc de batteries (2), et lorsque le plateau coulissant (13) se trouve dans la seconde position, le dispositif de levage (46) supporte le bloc de batteries (2) de telle sorte que les rouleaux (19) ne portent pas le poids du bloc de batteries (2).

2. Plateau de changement de batterie selon la revendication 1, dans lequel le dispositif de levage (46) est conçu pour lever le bloc de batteries (2) au cours du déplacement du plateau coulissant (13) à partir de la première position vers la seconde position, et est conçu pour abaisser le bloc de batteries (2) sur les rouleaux (19) au cours du déplacement du plateau coulissant (13) à partir de la seconde position vers la première position.

3. Plateau de changement de batterie selon la revendication 1 ou 2, dans lequel le plateau coulissant (13) peut être déplacé dans la direction longitudinale du chariot, la première position étant une position vers l'avant et la seconde position étant une position vers l'arrière.

4. Plateau de changement de batterie selon l'une quelconque des revendications 1 à 3, dans lequel le dispositif de levage (46) comprend au moins un élément en forme de coin (57) comprenant une surface de coin inclinée (59), l'élément en forme de coin (57) étant agencé dans le plateau coulissant (13), la surface de coin inclinée (59) faisant face à la direction vers la seconde position, et un élément de levage (47) comprenant une surface de glissement (55) qui est parallèle à la surface de coin (59), la surface de glissement (55) de l'élément de levage (47) étant conçue pour glisser le long de la surface de coin (59) de façon à réaliser un déplacement parallèle de l'élément de levage (47) par rapport aux rouleaux (19) afin de lever ou abaisser ainsi le bloc de batteries (2) au cours des déplacements du plateau coulissant entre les première et seconde positions.

5. Plateau de changement de batterie selon l'une quelconque des revendications 1 à 3, dans lequel le dispositif de levage (46) comprend au moins un premier et un second élément en forme de coin (57) séparés dans la direction du déplacement du plateau coulissant (13) et comprenant une surface de coin inclinée respective (59), les éléments en forme de coin (57) étant agencés dans le plateau coulissant (13), leurs surfaces de coin inclinées (59) faisant face à la direction vers la seconde position, et un élément de levage (47) comprenant deux surfaces de glissement (55), les surfaces de glissement (55) de l'élément de levage (47) étant conçues pour pouvoir glisser le long des surfaces de coin (59) de façon à réaliser un déplacement parallèle de l'élément de levage (47) par rapport aux rouleaux (19) afin de lever ou abaisser ainsi le bloc de batteries (2) au cours des déplacements du plateau coulissant entre les première et seconde positions.

6. Plateau de changement de batterie selon l'une quelconque des revendications 4 ou 5, dans lequel l'angle de coin de l'élément en forme de coin (57) se situe dans une plage comprise entre 15° et 30°.

7. Plateau de changement de batterie selon la revendication 6, dans lequel l'angle de coin est approximativement égal à 20°.

8. Plateau de changement de batterie selon l'une quelconque des revendications précédentes, dans lequel le plateau coulissant (13) comprend deux dispositifs de levage (46) séparés dans une direction latérale, transversale par rapport à la direction du déplacement du plateau coulissant (13).

9. Plateau de changement de batterie selon l'une quelconque des revendications précédentes, dans lequel le plateau coulissant (13) comprend un dispositif de verrouillage (21) conçu pour pouvoir verrouiller le plateau coulissant (13) dans la première position ou dans la seconde position.

10. Chariot rétractable (1) équipé d'un plateau de changement de batterie (13), comprenant :
un plateau coulissant (13) comprenant une pluralité de rouleaux (19) conçus pour supporter un bloc de batteries (2), lequel plateau coulissant (13) peut être déplacé dans le chariot entre une première position et une seconde position, **caractérisé en ce que** le plateau coulissant (13) est conçu de telle sorte que le bloc de batteries (2) puisse être roulé sur le plateau coulissant et hors de celui-ci lorsque le plateau coulissant (13) se trouve dans ladite première position, et de telle sorte que le bloc de batteries (2) soit agencé pour le fonctionnement du chariot (1) lorsque le plateau coulissant (13) se trouve dans ladite seconde position, et **en ce que** le plateau coulissant (13) comprend un dispositif de levage (46) pour lever et abaisser le bloc de batteries (2) de telle manière que lorsque le plateau coulissant (13) se trouve dans la première position, les rouleaux (19) supportent le bloc de batteries (2), et lorsque le plateau coulissant (13) se trouve dans la seconde position, le dispositif de levage (46) supporte le bloc de batteries (2) de telle sorte que les rouleaux (19) ne portent pas le poids du bloc de batteries (2).

11. Chariot rétractable selon la revendication 10, dans lequel le dispositif de levage (46) comprend :
au moins un élément en forme de coin (57) comprenant une surface de coin inclinée (59), l'élément en forme de coin (57) étant agencé dans le plateau coulissant (13), la surface de coin inclinée (59) faisant face à la direction vers la seconde position, et un élément de levage (47) comprenant une surface de glissement (55) qui est parallèle à la surface de coin (59), la surface de glissement (55) de l'élément de levage (47) étant conçue pour glisser le long de la surface de coin (59) de façon à réaliser un déplacement parallèle de l'élément de levage (47) par rapport aux rouleaux (19) afin de lever ou abaisser ainsi le bloc de batteries (2) au cours des déplacements du plateau coulissant entre les première et seconde positions.

12. Chariot rétractable selon la revendication 11, dans lequel la seconde position est définie par une surface d'arrêt (4) agencée dans le châssis du chariot, contre laquelle l'élément de levage (47) est conçu pour entrer en contact lorsque le plateau coulissant (13) se trouve dans la seconde position, l'élément de levage (47) coulissant vers le haut sur la surface de coin inclinée respective (59) dans la direction vers la première position.

13. Chariot rétractable selon l'une quelconque des revendications 10 à 12, dans lequel les déplacements du plateau coulissant (13) entre les première et seconde positions sont conçus pour être exécutés au moyen de l'unité de mât (5) du chariot (1).

14. Chariot rétractable selon la revendication 13, dans lequel le plateau coulissant (13) comprend un dispositif de verrouillage (21) conçu pour verrouiller le plateau coulissant (13) sur l'unité de mât (5) au cours des déplacements à partir de la seconde position vers la première position, et conçu pour verrouiller le plateau coulissant (13) sur le châssis du chariot lorsque le plateau coulissant (13) se trouve dans la seconde position.
